# EUROPEAN PATENT SPECIFICATION

(11) **EP 4 336 578 B1**
(45) Date of publication and mention of the grant of the patent: **24.06.2026**
(21) Application number: 22890377.9
(22) Date of filing: 02.11.2022
(51) Int. Cl.: H01M 4/04, B23K 26/362, B23K 37/047, B23K 37/04

(54) **ELECTRODE ETCHING APPARATUS**
ELEKTRODENÄTZVORRICHTUNG
APPAREIL DE GRAVURE D'ÉLECTRODE

(30) Priority: 03.11.2021 KR 20210149907
(43) Date of publication of application: 13.03.2024
(73) Proprietor: LG Energy Solution, Ltd., Seoul 07335 (KR)
(72) Inventor: PARK, Dong Hyeuk, Daejeon 34122 (KR); JO, Sungjun, Daejeon 34122 (KR)
(74) Representative: Plasseraud IP
(86) International application number: PCT/KR2022/017065
(87) International publication number: WO 2023/080646

(56) References cited:
- JP-A- 2018 028 361
- KR-A- 20150 062 839
- KR-A- 20210 048 702
- KR-A- 20210 081 155
- KR-B1- 101 571 390
- KR-B1- 101 958 881
- KR-B1- 102 158 708

## Description

### [Technical Field]

The present invention relates to an electrode etching apparatus used for etching an electrode active material or the like.

### [Background Art]

As the demand for mobile devices, electric vehicles, and the like increases, the demand for secondary batteries is rapidly increasing. In particular, among secondary batteries, lithium secondary batteries, which have high energy density and high voltage, have been commercialized and widely used.

The lithium secondary battery has a structure in which an electrode in which an active material is coated on a current collector, that is, an electrode assembly with porous separator interposed between a positive electrode and a negative electrode, is impregnated with an electrolyte containing a lithium salt. The electrode is manufactured, by forming an active material layer on a current collector via a mixing process of mixing/dispersing an active material, a binder, and a conductive material in a solvent to prepare a slurry, a coating process of coating the active material slurry on the current collector having a thin-film form and drying it, and a pressing process for increasing a capacity density of the electrode subjected to the coating process and enhancing the adhesiveness between the current collector and the active material.

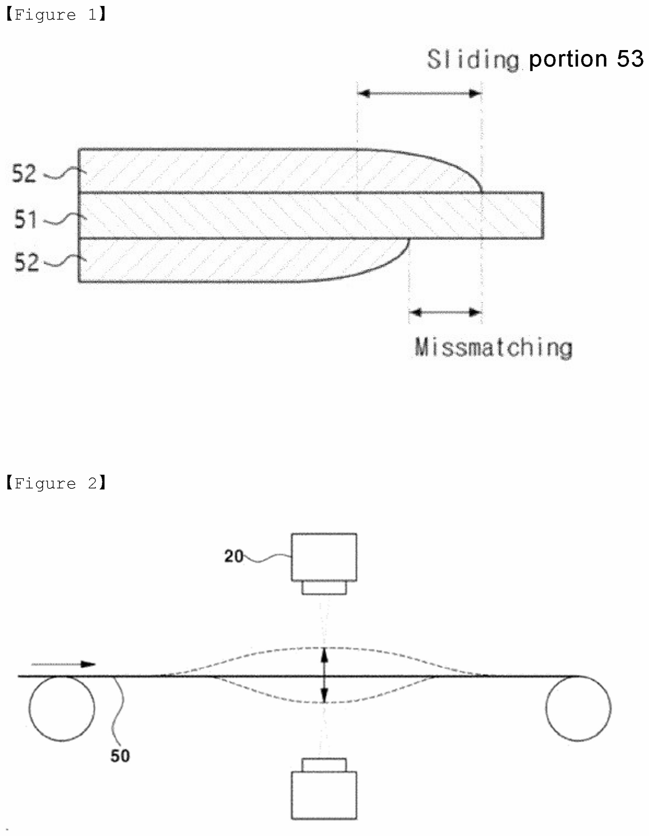

When the active material slurry is applied to the current collector, as shown in FIG. 1, because a sliding portion in which the thickness of the active material layer gradually decreases is formed at an edge of the active material layer, a problem of reducing the capacity of the active material layer arises. In addition, when the slurry is applied to both sides of the current collector, mismatching occurs in which the positions of the slurry applied to the upper side and the lower side do not match. Such mismatching causes deviation of the position of the active material layer when the anode and the negative electrode face each other, and such a deviated portion degrades the charge/discharge efficiency. In particular, the mismatching portion may deposit lithium on the surface of the negative electrode, and if such lithium deposition occurs for a long time, the battery capacity decreases.

Therefore, a process of etching the sliding portion is performed to uniformly form the end portion of the active material layer and prevent the formation of the sliding portion and/or the mismatching portion. Etching of the conventional sliding portion is performed by a method as shown in FIG. 2. That is, while allowing travel of an electrode assembly having an electrode active material layer formed on the upper side or the lower side of a current collector sheet, or both the upper side and the lower side by a roll-to-roll process, by irradiating a laser beam by a laser irradiation device installed on the upper or lower part of the electrode assembly or both the upper and lower parts, the sliding portion of the electrode active material layer is etched and removed.

However, according to such a method, there is a problem that a vertical swell occurs in the electrode assembly 50 located between the rolls, which causes the etching position to fluctuate, and poor laser focusing, resulting in frequent poor etching.

### [Prior art Documents]

### [Patent Documents]

JP 2000-251942 A, KR 101 571 390 B1 and KR 102 158 708 B1.

### [Disclosure]

### [Technical Problem]

The present invention was devised to solve the above problems of the related art.

An object of the present invention is to provide an electrode etching apparatus which improves the accuracy of etching (ablation), and can effectively prevent damage to the etching die due to laser beams and an occurrence of damage to the electrode assembly, by stably fixing the electrode assembly to be etched.

### [Technical Solution]

In order to achieve the above object, the present invention provides an electrode etching apparatus including the features of claim 1 and a method for removing a sliding part of an electrode assembly including the features of claim 11.

Dependent claims are directed on features of preferred embodiments of the present invention.

### [Advantageous Effects]

The electrode etching apparatus of the present invention provides an effect which improves the accuracy of etching (ablation), and can effectively prevent damage to the etching die due to laser beams and an occurrence of damage to the electrode assembly, by stably fixing the electrode assembly to be etched. Also, excellent etching quality is provided by such an effect.

### [Description of Drawings]

FIG. 1 is a cross-sectional view showing an embodiment of an electrode assembly.
FIG. 2 is a cross-sectional view schematically showing an embodiment of a conventional electrode assembly etching process.
FIG. 3 is a cross-sectional view schematically showing another embodiment of the electrode assembly etching process.
FIG. 4 is a cross-sectional view schematically showing an embodiment of the electrode etching apparatus of the present invention.
FIG. 5 is a perspective view schematically showing an embodiment of the electrode etching apparatus of the present invention.
FIG. 6 is a perspective view schematically showing an embodiment of the electrode etching apparatus of the present invention.
FIG. 7 is a cross-sectional view schematically showing a usage state of the electrode etching apparatus of the present invention.

### [Best Mode]

Hereinafter, embodiments of the present invention will be described in detail with reference to the accompanying drawings so that those skilled in the art can easily implement the present invention. This invention may, however, be embodied in many different forms and is not limited to the embodiments set forth herein. Similar parts are denoted by the same reference numerals throughout the specification.

When a certain constituent element is referred to as being "connected, equipped or installed" to another component, although it may be directly connected or installed to another component, it should be understood that there may be another constituent elements may be present between them. On the other hand, when a certain constituent element is referred to as being "directly connected to, equipped with, or installed in" another constituent element, it should be understood that there are no other constituent elements in between. On the other hand, other expressions describing relationships between constituent elements, namely "on top" and "directly on top" or "between" and "directly between" or "adjacent to" and "directly next to" should be interpreted in the same way.

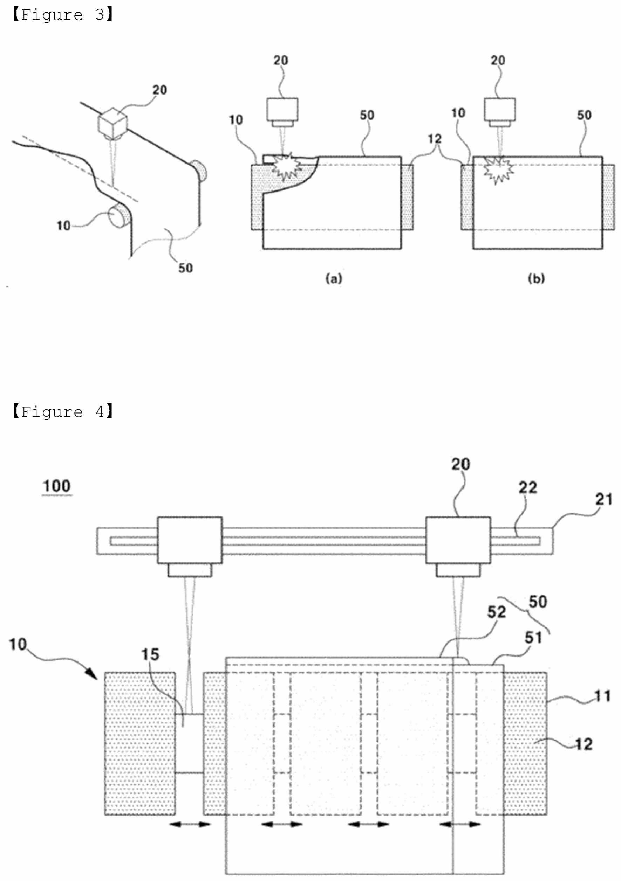

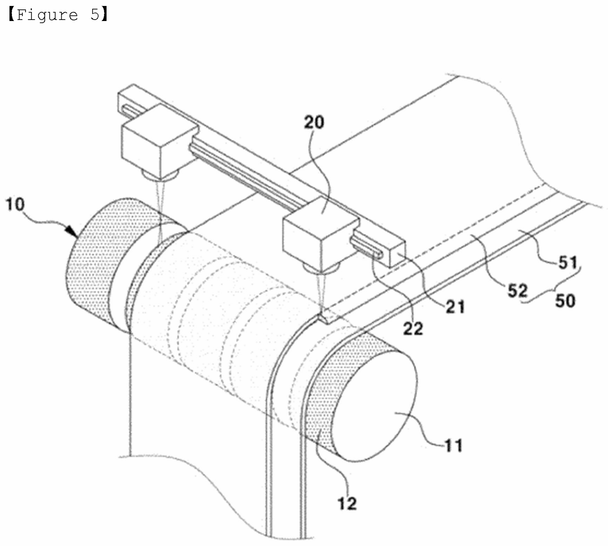

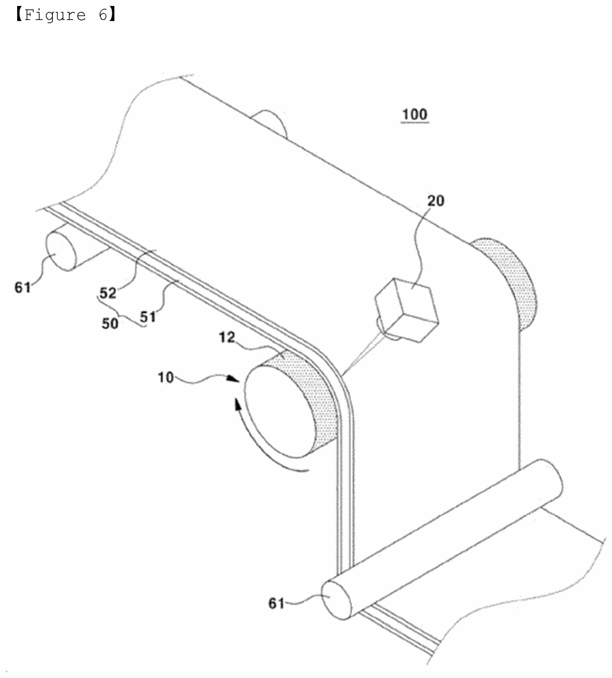

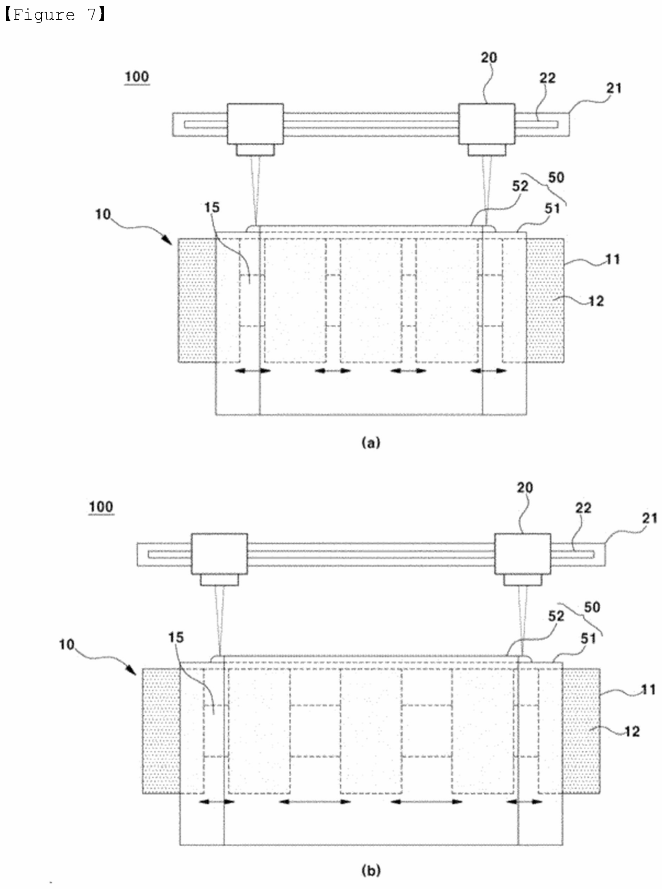

FIGS. 4 and 5 are a cross-sectional view and a perspective view schematically showing an embodiment of the electrode etching apparatus of the present invention, FIG. 6 is a perspective view schematically showing an embodiment of the electrode etching apparatus of the present invention, and FIG. 7 is a cross-sectional view schematically showing a usage state of the electrode etching apparatus of the present invention.

An electrode etching (ablation) apparatus 100 of the present invention includes an electrode assembly support roller 10, and a laser irradiation device 20, as shown in FIGS. 4 to 7.

The electrode assembly support roller 10 includes two or more cylindrical roller segments 11, and the two or more cylindrical roller segments 11 are coupled to the roller segment 11 adjacent to one shaft for fixation 15 in a spaced-apart manner.

The laser irradiation device 20 is disposed to be able to irradiate a separated space formed between the cylindrical roller segments 11 with a laser beam.

Because the electrode etching apparatus 100 of the present invention is configured such that the electrode assembly support roller 10 includes two or more cylindrical roller segments 11, as shown in FIG. 3(a), there is a feature that can prevent damage to the electrode assembly support roller 10 and the resulting damage to the electrode assembly, which may occur when the electrode assembly 50 is damaged. In addition, as shown in FIG. 3(b), when the output adjustment of the laser irradiation device 20 fails, there is a feature that can prevent damage to the electrode assembly support roller 10 and the resulting damage to the electrode assembly, which may occur due to the laser beam passing through the electrode assembly 50.

Acording to the present invention, one or more of the cylindrical roller segments 11 have a structure that can be moved and fixed along the shaft for fixation 15. As described above, when one or more of the cylindrical roller segments 11 are configured to be movable and fixed, it is possible to provide an advantage capable of utilizing the electrode etching apparatus 100 to correspond to the electrode assemblies 50 having various sizes.

The cylindrical roller segment 11 that can be moved and fixed may be one cylindrical roller segment 11 located on the outermost side of one end of the support roller 10, or may be two cylindrical roller segments 11 located on the outermost side of both ends of the support roller 11, or may be the entire cylindrical roller segments 11 that make up the support roller 10.

In an embodiment of the present invention, one or more cylindrical roller segments 11 that can be moved and fixed are movable and can be fixed in accordance with the width of the electrode assembly 50. That is, since the separated space between the cylindrical roller segments 11 to be irradiated with the laser beam also changes according to the width of the electrode assembly 50, this configuration enables adjustment of the position of the cylindrical roller segments 11 in accordance with this change.

In an embodiment of the invention, the shaft for fixation 15 can be configured as a rotary shaft. When the shaft for fixation 15 is configured as a rotary shaft as described above, there is provided an advantage in which the cylindrical roller segment 11 that constitutes the support roller 10 can be rotated, and the electrode assembly 50 to be fed can travel, while being more smoothly supported.

In an embodiment of the present invention, the rotary shaft can be configured to rotate passively while coming into contact with the electrode assembly 50 to be fed or rotated by a driving device provided separately.

In an embodiment of the present invention, one or more cylindrical roller segments 11 among the cylindrical roller segments 11 may have one or more suction holes 12 on a circumferential surface.

The cylindrical roller segment 11 having one or more suction holes may be one cylindrical roller segment 11 located at the outermost side of one end of the support roller 10, may be the two outermost cylindrical roller segments 11 located at the outermost side of both ends of the support roller 10, or may be the entire cylindrical roller segments 11 that make up the support roller 10.

In the present invention, the electrode assembly 50 may be made up of, for example, a current collector sheet 51, and electrode active material layers 52 laminated on the upper side or lower side of the current collector sheet of the electrode assembly 50, or both the upper and lower sides. The electrode etching apparatus 100 of the present invention can perform a function of irradiating a laser beam to etch and remove the electrode active material layer 52.

For example, the electrode etching apparatus 100 of the present invention can preferably be used to etch (ablate) and remove the sliding portion formed at the end portion when coating the electrode active material, and can also be used to remove the electrode active material from the current collector sheet 51 to form a non-coating portion.

Therefore, the suction holes 12 can perform a function of sucking and removing the electrode active material particles generated when the electrode active material is removed. In addition, the suction holes 12 can also perform a function of absorbing and fixing the lower side of the electrode assembly 50.

In an embodiment of the invention, the suction holes 12 can be connected with a suction device through the internal space of the cylindrical roller segment. At this time, the suction hole 12 and the suction device may be connected by an exhaust pipe. Further, the exhaust pipe may pass through the internal space of the shaft for fixation 15 and be connected to the suction device, and the internal space of the shaft for fixation 15 itself can also serve as the exhaust pipe.

The suction hole 12 may be formed entirely on the circumferential surface of the cylindrical roller segment 11. However, it is not formed only in this manner, but can be formed in various forms in consideration of the type of the object to be etched, the suction efficiency and the like.

In an embodiment of the present invention, the electrode etching apparatus 100 may further include a traveling equipment that allows the electrode assembly to travel while forming an internal angle of 70 degrees to 160 degrees, preferably 80 degrees to 130 degrees, and more preferably 85 degrees to 95 degrees around the support roller 10, as shown in FIG. 6.

When the electrode assembly 50 travels while forming the internal angle as described above, since a curved portion formed in the electrode assembly 50 forms a large contact area with the support roller 10, the curved portion can be more stably supported by the support roller 10 and thus is preferable.

In an embodiment of the present invention, the traveling equipment may be configured to include traveling rollers 61 located forward and rearward of the support rollers 10 on the basis of the movement direction of the electrode assembly.

The traveling roller 61 may be passively rotated while coming into contact with the electrode assembly 50 to be fed, or may be rotated by a driving device provided separately.

In an embodiment of the present invention, the laser irradiation device 20 may be located above the outer side of the electrode assembly 50 whose inner side is supported by the circumferential surface of the support roller 10 by a surface contact. That is, the laser irradiation device 20 can irradiate the electrode assembly 50 with a laser beam at the same position as described above to perform etching.

In an embodiment of the present invention, the laser irradiation device 20 can be installed to be movable along an axis parallel to the shaft for fixation 15 of the cylindrical roller segment. That is, in the present invention, although it is possible to form a separated space irradiated with a laser beam by movement of the cylindrical roller segment 11, when the laser irradiation device 20 can be moved as described above, it is preferable because the electrode etching apparatus 100 in accordance with the size of the electrode assembly 50 can be more easily set.

In an embodiment of the present invention, the laser irradiation device 20 may be fixed to a guide rail 21 located on an axis parallel to the shaft for fixation of the cylindrical roller segment 11, as shown in FIGS. 4 and 7. For example, a protrusion is formed in one of the guide rail 21 and the laser irradiation device 20, and a guide groove 22 is provided on the other thereof so that the laser irradiation device 20 can move by sliding. Thus, they can be coupled together to form the sliding portion.

In the present invention, as the laser irradiation device 20, a known laser irradiation device that can be used for etching (ablation) of the material can be used without limitation.

In an embodiment of the present invention, the electrode etching apparatus 100 can be used for etching the electrode active material layer 52 in an electrode assembly including the electrode active material layer 52 laminated on the current collector sheet 51 of the electrode assembly 50.

In the electrode etching apparatus 100 of the present invention, except for the configurations specified above, various components known in the field can be adopted without limitation, and structures of each component included in the electrode etching apparatus 100 can also be manufacture with structures known in this field when including relevant technical features.

### [Description of symbols]

| | | | |
|---|---|---|---|
| 10: | Electrode assembly support roller | | |
| 11: | Cylindrical roller segment | | |
| 12: | Suction hole | 15: | Shaft for fixation |
| 20: | Laser irridation device ice | 21: | Guide rail |
| 22: | Guide groove | 50: | Electrode assembly |
| 51: | Current collector sheet | | |
| 52: | Electrode active materiallayer | | |
| 53: | Sliding portion | | |
| 61: | Traveling roller | 100: | Electrode etching apparatus |

## Claims

1. An electrode etching apparatus (100), comprising:
an electrode assembly support roller (10); and
a laser irradiation device (20),
wherein the electrode assembly support roller (10) includes two or more cylindrical roller segments (11), and the two or more cylindrical roller segments (11) are coupled to one shaft for fixation (15) in a spaced-apart manner with an adjacent roller segment (11), and
the laser irradiation device (20) is located to be able to irradiate a separated space formed between the cylindrical roller segments (11) with a laser beam, wherein the laser irradiation device (20) is located above the outer side of the electrode assembly whose inner side is supported by a circumferential surface of the support roller (10),
**characterized in that** one or more of the cylindrical roller segments (11) are able to be moved and fixed along the shaft for fixation (15) to correspond to electrode assemblies (50) having various sizes,
and **in that** the laser irradiation device (20) is installed to be movable along an axis parallel to the shaft for fixation (15) of the cylindrical roller segments (11).

2. The electrode etching apparatus (100) according to claim 1,
wherein one or more cylindrical roller segments (11) that are able to be moved and fixed are one cylindrical roller segment (11) located on an outermost side of one end of the support roller (10), two cylindrical roller segments (11) located on the outermost side of both ends of the support roller (10), or the entire cylindrical roller segments (11) that make up the support roller (10).

3. The electrode etching apparatus (100) according to claim 1, wherein one or more cylindrical roller segments (11) that are able to be moved and fixed are moved and fixed in accordance with the width of the electrode assembly (50).

4. The electrode etching apparatus (100) according to claim 1,
wherein the shaft for fixation (15) is a rotary shaft.

5. The electrode etching apparatus (100) according to claim 1, wherein one or more cylindrical roller segments (11) among the cylindrical roller segments (11) are provided with one or more suction holes (12) on a circumferential surface thereof.

6. The electrode etching apparatus (100) according to claim 5,
wherein the cylindrical roller segment (11) having one or more suction holes (12) is one cylindrical roller segment (11) located at the outermost side of one end of the support roller (10), the two cylindrical roller segments (11) located at the outermost side of both ends of the support roller (10), or the entire cylindrical roller segments (11) that make up the support roller (10).

7. The electrode etching apparatus (100) according to claim 5, wherein the suction hole (12) is connected to a suction device through an internal space of the cylindrical roller segment (11).

8. The electrode etching apparatus (100) according to claim 1, wherein the electrode etching apparatus (100) further comprises a traveling equipment that causes the electrode assembly (50) to travel, while forming an internal angle of 70 to 160 degrees around the support roller (10).

9. The electrode etching apparatus (100) according to claim 8, wherein the traveling equipment comprises traveling rollers (61) located in front and behind the support rollers (10) on the basis of a movement direction of the electrode assembly (50).

10. The electrode etching apparatus (100) according to claim 1, wherein the laser irradiation device (20) is fixed to a guide rail (21) located on an axis parallel to the shaft for fixation (15) of the cylindrical roller segment (11).

11. Method for removing a sliding part (53) of an electrode assembly (50),
wherein the method uses an electrode etching apparatus (100) according to at least one of the preceding claims,
wherein one or more of the cylindrical roller segments (11) are moved and fixed along a shaft for fixation (15) to correspond to electrode assemblies (50) having various sizes,
wherein the laser irradiation device (20) is located above the outer side of the electrode assembly whose inner side is supported by the circumferential surface of the support roller (10) by a surface contact,
wherein the laser irradiation device (20) is installed to be movable along an axis parallel to the shaft for fixation (15) of the cylindrical roller segment (11),
wherein the method comprises:
the step that an inner side of the electrode assembly (50) which has an inner side formed of a current collector sheet (51) and an outer side formed of an electrode active material layer (52) is supported by the circumferential surface of the support roller (10) by a surface contact,
the step that a sliding portion (53) in which the thickness of the active material layer gradually decreases, which is formed at the end portion of the electrode active material layer (52), is positioned in the separated space formed between the cylindrical roller segments (11), and
the step that the laser beam is irradiated to the sliding portion (53) to remove the sliding portion from the current collector sheet (51).

## Patentansprüche

1. Elektrodenätzvorrichtung (100), umfassend:
eine Stützrolle für eine Elektrodenanordnung (10); und
eine Laserbestrahlungsvorrichtung (20),
wobei die Stützrolle für die Elektrodenanordnung (10) zwei oder mehr zylindrische Rollensegmente (11) aufweist, und die zwei oder mehr zylindrischen Rollensegmente (11) mit einer Befestigungswelle (15) in einer von einem benachbarten Rollensegment (11) beabstandeten Weise gekoppelt sind, und
die Laserbestrahlungsvorrichtung (20) so angeordnet ist, dass sie einen zwischen den zylindrischen Rollensegmenten (11) gebildeten getrennten Raum mit einem Laserstrahl bestrahlen kann,
wobei die Laserbestrahlungsvorrichtung (20) über der Außenseite der Elektrodenanordnung angeordnet ist, deren Innenseite durch eine Umfangsfläche der Stützrolle (10) gestützt wird,
**dadurch gekennzeichnet, dass**
eines oder mehrere der zylindrischen Rollensegmente (11) entlang der Befestigungswelle (15) bewegt und fixiert werden können, um Elektrodenanordnungen (50) mit verschiedenen Größen zu entsprechen, und
dadurch, dass die Laserbestrahlungsvorrichtung (20) so installiert ist, dass sie entlang einer Achse parallel zur Befestigungswelle (15) der zylindrischen Rollensegmente (11) beweglich ist.

2. Elektrodenätzvorrichtung (100) nach Anspruch 1, wobei ein oder mehrere zylindrische Rollensegmente (11), die bewegt und fixiert werden können, ein zylindrisches Rollensegment (11), das sich an einer äußersten Seite eines Endes der Stützrolle (10) befindet, zwei zylindrische Rollensegmente (11), die sich an der äußersten Seite beider Enden der Stützrolle (10) befinden, oder die gesamten zylindrischen Rollensegmente (11), die die Stützrolle (10) bilden, sind.

3. Elektrodenätzvorrichtung (100) nach Anspruch 1, wobei ein oder mehrere zylindrische Rollensegmente (11), die bewegt und fixiert werden können, entsprechend der Breite der Elektrodenanordnung (50) bewegt und fixiert werden.

4. Elektrodenätzvorrichtung (100) nach Anspruch 1, wobei die Befestigungswelle (15) eine Drehwelle ist.

5. Elektrodenätzvorrichtung (100) nach Anspruch 1, wobei eines oder mehrere zylindrische Rollensegmente (11) unter den zylindrischen Rollensegmenten (11) mit einem oder mehreren Sauglöchern (12) auf einer Umfangsfläche davon versehen sind.

6. Elektrodenätzvorrichtung (100) nach Anspruch 5, wobei das zylindrische Rollensegment (11) mit einem oder mehreren Sauglöchern (12) ein zylindrisches Rollensegment (11), das sich an einer äußersten Seite eines Endes der Stützrolle (10) befindet, die beiden zylindrischen Rollensegmente (11), die sich an der äußersten Seite beider Enden der Stützrolle (10) befinden, oder die gesamten zylindrischen Rollensegmente (11), die die Stützrolle (10) bilden, ist.

7. Elektrodenätzvorrichtung (100) nach Anspruch 5, wobei das Saugloch (12) durch einen Innenraum des zylindrischen Rollensegments (11) mit einer Saugvorrichtung verbunden ist.

8. Elektrodenätzvorrichtung (100) nach Anspruch 1, wobei die Elektrodenätzvorrichtung (100) ferner eine Verschiebungsvorrichtung umfasst, die die Elektrodenanordnung (50) verschiebt, während diese einen Innenwinkel von 70 bis 160 Grad um die Stützrolle (10) bildet.

9. Elektrodenätzvorrichtung (100) nach Anspruch 8, wobei die Verschiebungsvorrichtung Laufrollen (61) umfasst, die sich auf der Grundlage einer Bewegungsrichtung der Elektrodenanordnung (50) vor und hinter den Stützrollen (10) befinden.

10. Elektrodenätzvorrichtung (100) nach Anspruch 1, wobei die Laserbestrahlungsvorrichtung (20) an einer Führungsschiene (21) befestigt ist, die sich auf einer zur Befestigungswelle (15) des zylindrischen Rollensegments (11) parallelen Achse befindet.

11. Verfahren zum Entfernen eines Gleitabschnitts (53) einer Elektrodenanordnung (50),
wobei das Verfahren eine Elektrodenätzvorrichtung (100) nach mindestens einem der vorhergehenden Ansprüche verwendet,
wobei eines oder mehrere der zylindrischen Rollensegmente (11) entlang einer Befestigungswelle (15) bewegt und fixiert werden, um Elektrodenanordnungen (50) mit verschiedenen Größen zu entsprechen,
wobei die Laserbestrahlungsvorrichtung (20) über der Außenseite der Elektrodenanordnung angeordnet ist, deren Innenseite durch die Umfangsfläche der Stützrolle (10) durch einen Flächenkontakt gestützt wird,
wobei die Laserbestrahlungsvorrichtung (20) so installiert ist, dass sie entlang einer Achse parallel zur Befestigungswelle (15) des zylindrischen Rollensegments (11) beweglich ist,
wobei das Verfahren umfasst:
den Schritt, dass eine Innenseite der Elektrodenanordnung (50), die eine aus einer Stromkollektorfolie (51) gebildete Innenseite und eine aus einer Elektrodenaktivmaterialschicht (52) gebildete Außenseite aufweist, durch die Umfangsfläche der Stützrolle (10) durch einen Flächenkontakt gestützt wird,
den Schritt, dass ein Gleitabschnitt (53), in dem die Dicke der Aktivmaterialschicht allmählich abnimmt, der am Endabschnitt der Elektrodenaktivmaterialschicht (52) gebildet ist, in dem zwischen den zylindrischen Rollensegmenten (11) gebildeten getrennten Raum positioniert wird, und
den Schritt, dass der Laserstrahl auf den Gleitabschnitt (53) gerichtet wird, um den Gleitabschnitt von der Stromkollektorfolie (51) zu entfernen.

## Revendications

1. Appareil de gravure d'électrode (100), comprenant :
un rouleau de support d'ensemble d'électrodes (10) ; et
un dispositif d'irradiation laser (20),
dans lequel le rouleau de support d'ensemble d'électrodes (10) inclut deux segments de rouleau cylindriques (11) ou plus, et les deux segments de rouleau cylindriques (11) ou plus sont couplés à un arbre de fixation (15) de manière espacée avec un segment de rouleau adjacent (11), et
le dispositif d'irradiation laser (20) est situé de manière à pouvoir irradier avec un faisceau laser un espace séparé formé entre les segments de rouleau cylindriques (11),
dans lequel le dispositif d'irradiation laser (20) est situé au-dessus du côté extérieur de l'ensemble d'électrodes dont le côté intérieur est supporté par une surface circonférentielle du rouleau de support (10),
**caractérisé en ce que**
un ou plusieurs des segments de rouleau cylindriques (11) peuvent être déplacés et fixés le long de l'arbre de fixation (15) pour correspondre à des ensembles d'électrodes (50) ayant diverses tailles, et
**en ce que** le dispositif d'irradiation laser (20) est installé pour être mobile le long d'un axe parallèle à l'arbre de fixation (15) des segments de rouleau cylindriques (11).

2. Appareil de gravure d'électrode (100) selon la revendication 1, dans lequel un ou plusieurs segments de rouleau cylindriques (11) qui peuvent être déplacés et fixés sont un segment de rouleau cylindrique (11) situé sur un côté le plus extérieur d'une extrémité du rouleau de support (10), deux segments de rouleau cylindriques (11) situés sur le côté le plus extérieur des deux extrémités du rouleau de support (10), ou la totalité des segments de rouleau cylindriques (11) qui constituent le rouleau de support (10).

3. Appareil de gravure d'électrode (100) selon la revendication 1, dans lequel un ou plusieurs segments de rouleau cylindriques (11) qui peuvent être déplacés et fixés sont déplacés et fixés en fonction de la largeur de l'ensemble d'électrodes (50).

4. Appareil de gravure d'électrode (100) selon la revendication 1, dans lequel l'arbre de fixation (15) est un arbre rotatif.

5. Appareil de gravure d'électrode (100) selon la revendication 1, dans lequel un ou plusieurs segments de rouleau cylindriques (11) parmi les segments de rouleau cylindriques (11) sont pourvus d'un ou plusieurs trous d'aspiration (12) sur une surface circonférentielle de ceux-ci.

6. Appareil de gravure d'électrode (100) selon la revendication 5, dans lequel le segment de rouleau cylindrique (11) ayant un ou plusieurs trous d'aspiration (12) est un segment de rouleau cylindrique (11) situé sur un côté le plus extérieur d'une extrémité du rouleau de support (10), les deux segments de rouleau cylindriques (11) situés sur le côté le plus extérieur des deux extrémités du rouleau de support (10), ou la totalité des segments de rouleau cylindriques (11) qui constituent le rouleau de support (10).

7. Appareil de gravure d'électrode (100) selon la revendication 5, dans lequel le trou d'aspiration (12) est raccordé à un dispositif d'aspiration à travers un espace interne du segment de rouleau cylindrique (11).

8. Appareil de gravure d'électrode (100) selon la revendication 1, dans lequel l'appareil de gravure d'électrode (100) comprend en outre un équipement de déplacement qui amène l'ensemble d'électrodes (50) à se déplacer, tout en formant un angle interne de 70 à 160 degrés autour du rouleau de support (10).

9. Appareil de gravure d'électrode (100) selon la revendication 8, dans lequel l'équipement de déplacement comprend des rouleaux de déplacement (61) situés devant et derrière les rouleaux de support (10) sur la base d'une direction de mouvement de l'ensemble d'électrodes (50).

10. Appareil de gravure d'électrode (100) selon la revendication 1, dans lequel le dispositif d'irradiation laser (20) est fixé à un rail de guidage (21) situé sur un axe parallèle à l'arbre de fixation (15) du segment de rouleau cylindrique (11).

11. Procédé pour enlever une portion de glissement (53) d'un ensemble d'électrodes (50),
dans lequel le procédé utilise un appareil de gravure d'électrode (100) selon au moins l'une des revendications précédentes,
dans lequel un ou plusieurs des segments de rouleau cylindriques (11) sont déplacés et fixés le long d'un arbre de fixation (15) pour correspondre à des ensembles d'électrodes (50) ayant diverses tailles,
dans lequel le dispositif d'irradiation laser (20) est situé au-dessus du côté extérieur de l'ensemble d'électrodes dont le côté intérieur est supporté par la surface circonférentielle du rouleau de support (10) par un contact de surface,
dans lequel le dispositif d'irradiation laser (20) est installé pour être mobile le long d'un axe parallèle à l'arbre de fixation (15) du segment de rouleau cylindrique (11),
dans lequel le procédé comprend :
l'étape dans laquelle un côté intérieur de l'ensemble d'électrodes (50) qui a un côté intérieur formé d'une feuille de collecteur de courant (51) et un côté extérieur formé d'une couche de matériau actif d'électrode (52) est supporté par la surface circonférentielle du rouleau de support (10) par un contact de surface,
l'étape dans laquelle une portion de glissement (53) dans laquelle l'épaisseur de la couche de matériau actif diminue progressivement, qui est formée à la partie d'extrémité de la couche de matériau actif d'électrode (52), est positionnée dans l'espace séparé formé entre les segments de rouleau cylindriques (11), et
l'étape dans laquelle le faisceau laser est irradié sur la portion de glissement (53) pour enlever la portion de glissement de la feuille de collecteur de courant (51).
